# EUROPÄISCHE PATENTSCHRIFT

(11) **EP 0 855 311 B1**
(45) Veröffentlichungstag und Bekanntmachung des Hinweises auf die Patenterteilung: **25.08.2010**
(21) Anmeldenummer: 97121297.2
(22) Anmeldetag: 04.12.1997
(51) Int. Cl.: B60R 16/00, H04B 1/20, H04L 12/403, H04L 12/40, H04L 29/08

(54) **Soundsystem für ein Kraftfahrzeug**
Sound system for a motor vehicle
Système sonore pour véhicule à moteur

(30) Priorität: 10.12.1996 DE 19651308
(43) Veröffentlichungstag der Anmeldung: 29.07.1998
(73) Patentinhaber: Harman Becker Automotive Systems GmbH, 76307 Karlsbad (DE)
(72) Erfinder: Becker, Michael, 76661 Philippsburg (DE)
(74) Vertreter: Patentanwälte Westphal, Mussgnug & Partner

(56) Entgegenhaltungen:
- EP-A- 0 725 522
- US-A- 5 040 168
- US-A- 5 237 322

## Beschreibung

Die Erfindung betrifft ein Soundsystem für ein Kraftfahrzeug mit einer Steuereinheit, mit einer Eingabeeinheit zur Bedienung des Systems, mit einer Anzeigeeinheit, mit einer Einheit zur Generierung der Quelldaten in Form von Audiodaten, mit einer Verstärkereinheit zur Verstärkung der Quelldaten, mit einem oder mehreren dieser zugeordneten Lautsprechern und mit einem Bussystem, das die Übertragung der Quelldaten und der Steuerdaten zur Steuerung der Einheiten zwischen den einzelnen Einheiten sicherstellt.

Ein derartiges Soundsystem ist allgemein in der EP-A-0 725 522 beschrieben. Weiterhin ist ein derartiges System in der Druckschrift "OCC 8001" CONAN "Optical Transciever", C&C Electronics Ltd., 1996 beschrieben. Die dargestellten Soundsysteme zeigen eine Steuereinheit, welche auch Head-Unit genannt wird, die die Steuerung des gesamten Systems bewirkt und die die Ausgabe von Information über die Anzeigeeinheit, die Bedienung des Systems über die Eingabeeinheit durch den Benutzer sowie die Umsetzung in entsprechende Steuerbefehle für die einzelnen Einheiten des Soundsystems ermöglicht. Dabei zeigen die bekannten Soundsysteme für Kraftfahrzeuge einen starren Systemaufbau, der es nur erlaubt, bestimmte Einheiten in das System zu integrieren, welche durch die Steuereinheit / Head-Unit vorgesehen sind. Damit erweisen sich die bekannten Soundsysteme für Kraftfahrzeuge als wenig flexibel, wenig benutzerfreundlich und sehr teuer im Falle einer Adaption des Systems an die neuen Gegebenheiten. Eine Anpassung an neue, andersartige, zusätzliche Komponenten wird bei den bekannten Soundsystemen dadurch gewährleistet, daß neben der neuen Einheit zusätzlich eine neue Steuereinheit / Head-Unit in das System integriert werden muß, was die bereits beschriebenen Nachteile mit sich bringt.

Aufgabe der Erfindung ist es, das Soundsystem für ein Kraftfahrzeug so auszubilden, daß Änderungen am System möglichst einfacher, kostengünstiger und sicherer durchgeführt werden können.

Diese Aufgabe wird bei dem bekannten Soundsystem dadurch erreicht, daß die Steuereinheit in die Lage versetzt ist, daß sie von einer oder mehreren oder allen anderen Einheiten des Systems deren möglichen Funktionsumfang, welcher in einem dieser zugeordneten Speicher abgelegt ist, über das Bussystem zugeführt bekommt und aus der Summe der einzelnen Funktionsumfänge der Funktionsumfang des Gesamtsystems gebildet wird. Dieser Funktionsumfang des gesamten Systems bildet stets eine Teilmenge aller Funktionsumfänge der einzelnen Einheiten des Soundsystems. Das dargestellte Soundsystem zeigt erfindungsgemäß eine Struktur, welche an dezentralen Stellen den Funktionsumfang der einzelnen Einheiten hinterlegt hat und wo an zentraler Stelle vorzugsweise in der Steuereinheit ein aus den verschiedenen einzelnen Funktionsumfängen der einzelnen Einheiten gebildeter Funktionsumfang des gesamten Systems zur Steuerung des gesamten Systems hinterlegt ist.

Anders als im Stand der Technik wird bei einer Änderung, beispielsweise beim Hinzufügen einer neuen, ursprünglich nicht vorgesehenen Einheit des Soundsystems, nicht mehr die Steuereinheit, respektive die Head-Unit, ausgetauscht, sondern in ihrer Art beibehalten und sichergestellt, daß der hinzugekommene Funktionsumfang der zusätzlichen Einheit zur Bildung des Funktionsumfangs des gesamten Systems mit herangezogen wird, wodurch den Änderungen des gesamten Systems Rechnung getragen wird und der Benutzer den Änderungen entsprechend neue, geänderte Bedienmöglichkeiten und entsprechende Funktionalitäten des Systems zur Verfügung gestellt bekommt. Es wird damit, soweit erforderlich, dem neuen Funktionsumfang des gesamten Systems entsprechend eine neue Bedienungsführung zur Bedienung des gesamten Systems zur Verfügung gestellt, was ggf. mit geänderten Darstellungen in der Anzeigeeinheit bzw. mit geänderten Zuordnungen von Befehlen zu den Eingabetasten der Eingabeeinheit verbunden ist.

Durch diese Ausbildung des Soundsystems gelingt es, den Funktionsumfang des Soundsystems neuen Anforderungen sicher, einfach und kostengünstig anzupassen. Aufwendige Zusatzgeräte und Neugeräte sind in diesem Falle nicht erforderlich.

Ein besonders vorteilhaftes, flexibles Soundsystem ist dann gegeben, wenn eine Vielzahl von Einheiten über ihnen zugeordnete Speicher verfügt, in denen die für sie spezifischen Funktionsumfänge abgelegt sind und aus diesen der Gesamtfunktionsumfang des Systems gebildet wird, in dem alle Funktionalitäten verwendet werden oder nur bestimmte Teile der Funktionalitäten der einzelnen Einheiten in die Funktionalität des Gesamtsystems übertragen werden sollen. Diese teilweise Übertragung kann automatisch durch die Steuereinheit oder durch den Benutzer oder durch eine zusätzliche, zeitweise in das Soundsystem über die Busleitung angeschlossene, integrierte Einheit erfolgen.

Damit wird die Vielfältigkeit des Systems auf besonders vorteilhafte Weise nach den jeweiligen Bedürfnissen des Benutzers entsprechend den jeweils zur Verfügung stehenden Einheiten zur Erzeugung von Audiodaten oder den Einheiten zur Verstärkung dieser Daten sowie den Lautsprechern flexibel und frei konfigurieren, was auch der Fall sein kann, wenn keine neuen Einheiten in das System aufgenommen werden, sondern nur die verwendeten Teilmengen der Einzelfunktionsumfänge neuen Anforderungen durch Erweiterung oder Einschränkung angepaßt werden.

Nach einer bevorzugten Ausführungsform der Erfindung ist der einer Einheit zugeordnete Speicher als Teil dieser Einheit ausgebildet. Dadurch ist gewährleistet, daß der Speicherinhalt mit dem möglichen Funktionsumfang der Einheit nicht über das Bussystem an die Einheit übertragen werden muß, um anschließend den Funktionsumfang von der Einheit wiederum über die Busleitung an die Steuereinheit zu übermitteln. Im Fall eines optischen Bussystems, welches besonders große Vorteile in Richtung EMV-Stabilität und Gewichtsersparnis aufweist, kann auf die zwingend erforderlichen, kostenintensiven elektrisch-optischen Wandler zwischen den Speichern und den Einheiten verzichtet werden, was das System weniger anfällig gegen Störungen macht und dadurch die Sicherheit der Bedienung und damit die Bedienfreundlichkeit des Systems erhöht. Darüber hinaus erweist sich diese Ausbildung als besonders kostengünstig.

Nach einer vorteilhaften Weiterbildung der Erfindung ist der Speicher als Teil einer Rechnereinheit ausgebildet, welche über das Bussystem mit der dem Speicher zugeordneten Einheit verbunden ist, und welche als eigenständige räumlich von den anderen Einheiten separierte Rechnereinheit ausgebildet ist, und welche bei Bedarf über das Bussystem den Funktionsumfang der dem Speicher zugeordneten Einheit direkt oder indirekt der Steuereinheit zur Bildung des Funktionsumfangs des gesamten Systems zuführen kann. Dabei erweist sich die Verwendung einer Rechnereinheit als besonders vorteilhaft, da sie sehr flexible Speicherstrukturen aufweist, in welche über andere Schnittstellen der Rechnereinheit auf einfache Weise andere, geänderte Funktionsumfänge einschreibbar sind. Auch ist ermöglicht, eine gegebenenfalls zentrale Rechnereinheit mit entsprechendem Speicher in dem System vorzusehen, welche die zentrale Verwaltung der einzelnen Funktionsumfange der einzelnen Einheiten gewährleistet und bei Bedarf diese direkt oder indirekt an die Steuereinheit zur Bildung des neuen, geänderten Funktionsumfangs des gesamten Soundsystems über das Bussystem überträgt. Vorzugsweise ist die Rechnereinheit lösbar mit dem System verbunden. Durch Verwendung einer geliehenen spezifischen Rechnereinheit in der Art einer vorübergehenden Integration in das System über eine vorbereitete Schnittstelle im Bussystem kann dem System ein neuer, geänderter Gesamtfunktionsumfang zugrunde gelegt werden. Dadurch ist ein sehr flexibles und für den Benutzer kostengünstiges System gegeben. Beispielsweise kann durch ein derartiges System sehr einfach eine neue Funktionalität, beispielsweise ein neuer Typ von 3-D-Sound als neue Funktionalität des Systems einschließlich der dieser Funktionalität zugeordneten Bedienungsführung eingegeben werden und damit den individuellen Bedürfnissen des Benutzers auf sehr einfache, kostengünstige und flexible Weise angepaßt werden. Damit gelingt es, die Notwendigkeit des Ersetzens kompletter Einheiten oder des gesamten Soundsystems in vielen Fällen durch eine reine Neuprogrammierung des Systems zu ersetzen, was sich neben den genannten Vorteilen auch im Hinblick auf die Verschwendung von Ressourcen und die Vermeidung von Abfall vorteilhaft bemerkbar macht.

Eine besonders einfache und angenehme Art der Bedienung des Soundsystems wird dadurch erreicht, daß die Steuereinheit, die Eingabeeinheit und die Anzeigeeinheit dergestalt miteinander verbunden sind, daß entsprechend dem Funktionsumfang des gesamten Systems auf der Anzeigeeinheit spezifische Bedienmenues dargestellt werden, die die Bedienung des Systems mit Hilfe der Eingabeeinheit anhand der Darstellungen in der Anzeigeeinheit zielstrebig und einfach ermöglichen. Die Bedienmenues können spezifisch sein für die einzelnen Funktionalitäten der einzelnen Einheiten, sie können aber auch spezifisch sein für die Art und Weise des Vorgangs zur Bildung eines neuen, geänderten Funktionsumfangs des gesamten Systems. Dabei ist es möglich die Anzeigeeinheit mit einer zusätzlichen Sprachausgabe zu versehen, welche die Bedienfreundlichkeit und Bediensicherheit des Gesamtsystems deutlich erhöht. Ebenso kann mit vergleichbaren Vorteilen die Eingabeeinheit auch als sprachgesteuerte Eingabeeinheit ausgebildet sein.

Als bevorzugte Ausbildung des Soundsystems hat sich herausgestellt, die Eingabeeinheit und die Anzeigeeinheit zu einer einzigen Einheit zusammenzufassen und diese bevorzugt so auszubilden, daß die Anzeigeeinheit in einzelne Segmente unterteilt ist, denen einzelne Tasten der Eingabeeinheit räumlich zugeordnet sind und welche jeweils die der zugeordneten Taste zugewiesene Bedienfunktionen darstellen und die entsprechenden Tasten und die Segmente durch die Steuereinheit anhand des Funktionsumfanges des gesamten Systems so ansteuern, daß die den Tasten zugewiesenen und in dem zugeordneten Segment dargestellten Funktionen durch Betätigen der Tasten ausgelöst werden können. Durch diese Ausbildungen gelingt es, das Soundsystem sehr einfach mit möglichst wenigen Schnittstellen und Einheiten aufzubauen, was die Verwaltung des gesamten Systems, respektive die Steuerung der einzelnen Einheiten, wie auch die Versorgung des Systems mit der erforderlichen Energie vereinfacht und dadurch das System weniger anfällig gegen Störungen macht. Dadurch ist ein erhöhtes Maß an Bediensicherheit und ein erhöhtes Maß an Vereinfachung der Bedienung des Systems gegeben. Nach der beschriebenen Ausführungsform ist es möglich, eine zentrale Einheit als Man-Machine-Interface, bestehend aus Eingabe- und Anzeigeeinheit im Fahrzeug, vorzugsweise im Dashboard unterzubringen, und all die anderen Einheiten, wie Tuner, CD-Player, Videoplayer oder ähnliches im Kraftfahrzeug an der ihrer Funktion oder den Möglichkeiten des Fahrzeuges angepaßten und optimierten Position unterzubringen und über das Bussystem so miteinander zu verbinden, daß die erforderlichen Steuer- und Quelldaten zielgerichtet übertragen werden. Damit ist es beispielsweise möglich, den Rundfunktuner oder TV-Tuner am ansich idealen Ort im Bereich der Antenne anzuordnen und nur noch die von diesen abgegebenen Quelldaten an den entsprechenden Verstärker und die Ausgabeeinheit weiterzuleiten. Die Steuerung erfolgt in diesem Fall über die zentrale Einheit, das Man-Machine-Interface, welches dem Benutzer die Möglichkeit der Bedienung aller Systemkomponenten mit deren jeweiligen Funktionsumfängen gewährt. Bei Änderungen der Funktionsumfänge des Systems durch Änderung der Funktionsumfänge einzelner Komponenten oder durch Hinzufügen oder Entfernen einzelner Komponenten läßt sich das erfindungsgemäße, beschriebene System besonders einfach und sicher neu konfigurieren.

Als bevorzugte Ausbildung der Erfindung hat sich gezeigt, daß neben den Audiodaten andere Multimediadaten, insbesondere Videodaten, übertragen werden können und daß entsprechende Einheiten zur Generierung dieser Multimediadaten und entsprechende Einheiten zur Darstellung dieser Multimediadaten vorgesehen sind. Als Beispiele für Einheiten zur Generierung von Multimediadaten sind insbesondere DVD-Player, CD-ROM-Lesegeräte oder Navigationsgeräte zu nennen und als Einheiten zur Darstellung dieser Multimediadaten zeigen sich beispielsweise LCD-Displays. Gerade durch die Vielfalt und die sehr dynamische Entwicklung des Multimediabereiches, mit seinen spezifischen Multimediadaten, den spezifischen Informationsumfängen der jeweiligen Geräte einschließlich der Art und Weise der Bedienbarkeit dieser Geräte, zeigt sich der besondere Vorteil des erfindungsgemäßen Systems, da es auf alle möglichen Änderungen von neuen Geräten im Bereich Multimedia und deren spezifische Entwicklungen jederzeit flexibel reagieren kann und das Soundsystem den Erfordernissen einfach und flexibel anpassen kann. Diese Flexibilität erweist sich um so mehr, je größer die Zahl der Einheiten zur Generierung von Audio- und/oder Multimediadaten sind, da bei derartigen Systemen Änderungen durch Ersetzen der Geräte durch den Benutzer und damit Ändern des Funktionsumfanges sehr viel häufiger gegeben sind als bei Systemen mit nur einer einzigen Einheit zur Generierung von Audio- und/oder Multimediadaten. Bei derartigen Systemen kann der Benutzer gegebenenfalls nach seinen Vorstellungen den Funktionsumfang des gesamten Systems festlegen und ihm die entsprechenden Steuerbefehle und Bedienbefehle für die Zukunft für die Bedienung des Systems zugrunde legen.

Bei Systemen mit mehreren Verstärkereinheiten zur Verstärkung der Audio-Quelldaten zeigen sich die besonderen Vorteile des erfindungsgemäßen Systems in besonderer Weise, da gerade diese Verstärkereinheiten, insbesondere wenn sie jede für sich spezifisch zugeordnete Einheiten zur Wandlung der verstärkten Quelldaten in Schallwellen aufweisen, eine Vielzahl von unterschiedlichen Funktionalitäten aufweisen. Dies um so mehr, da jeder Verstärkereinheit für jeden ihr zugeordneten Lautsprecher spezifische, dem Ort und den sonstigen Eigenschaften des Lautsprechers angepaßte und spezifisch verstärkte Quelldaten zur Verfügung gestellt werden können, was sich durch unterschiedliche Laufzeitverzögerungen, Vorverzerrungen und ähnliches ausdrücken können. Wird aus irgendwelchen Gründen irgendeine Komponente, insbesondere eine Einheit zur Wandlung der verstärkten Quelldaten, geändert, so lassen sich die einzelnen Funktionsumfänge der Verstärkereinheit so anpassen, daß das gesamte Soundsystem mit der neuen, geänderten Einheit zur Wandlung der verstärkten Quelldaten in Schallwellen für den Benutzer ein möglichst ideales Klangempfinden erzeugt. Damit ist durch das erfindungsgemäße System auch ermöglicht, daß eine Änderung des Funktionsumfangs dahingehend möglich ist, daß für bestimmte Positionen im Fahrzeug, welche durch den Benutzer gewählt werden können, jeweils ein nahezu idealer Klangraum unter Ausnutzung der verschiedenen Verstärkerparameter, wie Fader, Balance, Verzögerungswerte, Vorverzerrung und ähnlichen eingestellt werden kann. Jeder neue Parametersatz stellt einen geänderten Funktionsumfang dar, der bei dem erfindungsgemäßen System auf besonders einfache und flexible Weise Verwendung finden kann. Diese Vorteile ergeben sich um so mehr, wenn jeder Einheit zur Wandlung der verstärkten Quelldaten in Schallwellen eine eigene Verstärkereinheit zugeordnet wird, d.h. sogenannte Aktivlautsprecher Verwendung finden. Damit kann je nach Art der Verwendung der aktiven Lautsprecher diesen ein jeweils spezifischer Funktionsumfang als deren Funktionsumfang zugeordnet sein, welcher dann erfindungsgemäß zur Bildung des Funktionsumfangs des gesamten Systems teilweise oder vollständig herangezogen wird.

Vorzugsweise ist das Soundsystem mit einem Zeitgeber versehen, der nach Ablauf einer vorgegebenen Zeitspanne die Generierung des Funktionsumfanges des gesamten Systems aus den Funktionsumfangen der einzelnen Einheiten sicherstellt. Durch dieses System ist eine automatisierte Generierung des Funktionsumfangs des gesamten Systems in regelmäßigen Zeitabständen gegeben, was ein sehr sicheres und einfaches Handhaben des Systems und der Möglichkeiten des Systems erlaubt. Wird die vorgegebene Zeitspanne einstellbar ausgebildet, so läßt sich auf vorteilhafte Weise den einzelnen Bedürfnissen des Benutzers Rechnung tragen. Wird der Benutzer das System öfters durch Hinzufügen oder Austauschen einzelner Komponenten oder Entfernen einzelner Komponenten oder einfach den veränderten einzelnen Wunschvorstellungen des jeweiligen Benutzers anpassen wollen, so wird er eine verkürzte, vorgegebene Zeitspanne einstellen, während ein Benutzer, der keine Änderungen oder praktisch keine Änderungen vorgesehen hat, dem System eine lange Zeitspanne bis zur Neukonfigurierung des Systems einstellen wird. Durch diese einstellbare, vorgegebene Zeitspanne wird die Benutzerfreundlichkeit des Systems in besonderer Weise gewährleistet, da sich das System automatisch ohne Aktivitäten des Benutzers den Funktionsumfang des gesamten Systems festlegt, indem es auf die Funktionsumfänge der einzelnen Einheiten, Komponenten des Systems zurückgreift und aus diesen den Gesamtfunktionsumfang bildet. Darüber hinaus erweist sich ein derartiges System als besonders sicher, da der Ablauf der Festlegung des neuen Funktionsumfangs stets in festen Bahnen verläuft, ohne dabei die Flexibilität des Systems, d.h. Berücksichtigung von Änderungen in der verschiedensten Art und Weise einzuschränken.

Vorzugsweise wird das System so ausgebildet, daß das Einschalten des gesamten Audiosystems oder auch jeder einzelnen Einheit erkannt wird und durch dieses Einschalten die Bildung des Funktionsumfangs des gesamten Systems aus den Funktionsumfängen der einzelnen Einheiten ausgelöst wird. Dabei ist zu beachten, daß ein Hinzufügen einer Einheit dem Einschalten dieser Einheit gleichkommt. Durch diese spezifische Art der Auslösung der Bildung des Gesamtfunktionsumfang ist auf einfache Art und Weise sichergestellt, daß bei reduziertem Verwaltungsaufwand stets ein den einzelnen Komponenten angepaßter Gesamtfunktionsumfang gegeben ist, der sich automatisch den geänderten Bedingungen, insbesondere beim Hinzufügen weiterer Komponenten, d.h. dem Ersetzen einzelner Komponenten durch Entfernen und anschließendes Hinzufügen, angepaßt ist. Dadurch ist ein sehr flexibles System gewährleistet, das aufgrund der reduzierten Verwaltung sicher in seiner Funktion ist. Dieses System zeichnet sich insbesondere dadurch aus, daß es nur für sehr begrenzte Zeit, insbesondere beim Einschalten, nicht im vollen Umfang funktionsfähig ist, da in dieser Zeit der gesamte Funktionsumfang erst gebildet werden muß und dadurch die Bedienung des Systems für diese Zeit nicht oder nur beschränkt möglich ist.

Als besonders geeignetes Gesamtsystem zeigt sich ein System, welches mittels der Bedieneinheit zur Bildung des gesamten Funktionsumfangs des gesamten Systems veranlaßt werden kann. Hat der Benutzer das Bedürfnis das Soundsystem in seinem Funktionsumfang zu verändern oder den geänderten Eigenschaften anzupassen, so kann er die Bildung des Funktionsumfangs des gesamten Systems durch Betätigung eines oder mehrerer Bedienelemente der Bedieneinheit auslösen. Damit wird sichergestellt, daß alleine dann wenn es notwendig ist, die Bildung des Funktionsumfangs ausgelöst wird und dadurch das System für kurze Zeit in der Funktionsweise behindert wird. Dadurch ist die Funktionalität des gesamten Systems über nahezu die vollständige Zeit sichergestellt. Eine sichere und flexible Anpassung an die Erfordernisse und Wünsche des Benutzers ist bei dem System weiterhin in vorzüglicher Weise sichergestellt.

Darüber hinaus hat sich als bevorzugte Ausbildung des Soundsystems gezeigt, daß es in der Lage ist, durch den Benutzer veranlaßt die Ausgabe der Funktionsumfänge des gesamten Systems sowie der einzelnen und/oder aller Einheiten über die Anzeigeeinheit zu ermöglichen. Darüber hinaus hat es sich als vorteilhaft erwiesen, durch entsprechende Bedienungsführung mittels der Bedieneinheit und der Anzeigeeinheit sicherzustellen, daß einzelne Teilfunktionsumfänge oder auch ganze Funktionsumfänge einzelner Komponenten für die Benutzung zur Bildung des Funktionsumfangs des gesamten Systems selektiert werden. Nach Abschluß der Selektion der einzelnen ausgewählten Funktionsumfänge der einzelnen Einheiten wird dann der gesamte Funktionsumfang des Systems gebildet, wodurch der Bedien- und Anzeigeeinheit dem neuen gesamten Funktionsumfang entsprechende Menues und Funktionalitäten zugewiesen werden, wie auch die Steuereinheit und die einzelnen Einheiten nur noch die für den beschränkten, neugebildeten gesamten Funktionsumfang des Systems relevanten Steuerbefehle damit für die Funktionalitäten des neuen gesamten Funktionsumfangs des Systems relevanten Funktionalitäten sichergestellt sind. Damit läßt sich das System sehr einfach nach den Wünschen des Benutzers anpassen und auf das für den gewünschten Funktionsumfang notwendige Maß an Steuer- und Verwaltungstätigkeit reduziert. Es ist also nicht mehr notwendig, eine Vielzahl von Funktionalitäten des Systems zu unterstützen, die der Benutzer nicht wünscht. Damit läßt sich die Bediensicherheit und Funktionssicherheit des Systems deutlich erhöhen, ohne daß die Flexibilität des Systems beschränkt wird.

Neben der Anwendung des Soundsystems in einem Kraftfahrzeug erweist sich die Verwendung dieses Systems in einem Wohnwagen oder einem Haus oder einer Wohnung als vorteilhaft, da auch in diesen vergleichbare Problemstellungen, insbesondere beim Hinzufügen weiterer Komponenten in ein über ein Bussystem verbundene Einheiten aufweisendes System, auftreten. Damit zeigen sich auch die vergleichbaren Vorteile, insbesondere dann wenn einzelne Komponenten ergänzt werden, beispielsweise wenn ein weiterer Raum der Wohnung mit Einheiten zur Wandlung von Audio-Quelldaten in Schallwellen und gegebenenfalls Verstärkern versehen werden soll.

Bei einer derartigen Änderung sollte das System möglichst einfach, sicher, schnell und flexibel an die neuen Bedürfnisse angepaßt werden. Insoweit erweist sich die Verwendung des Soundsystems für ein Kraftfahrzeug in den anderen Umgebungen als besonders vorteilhaft.

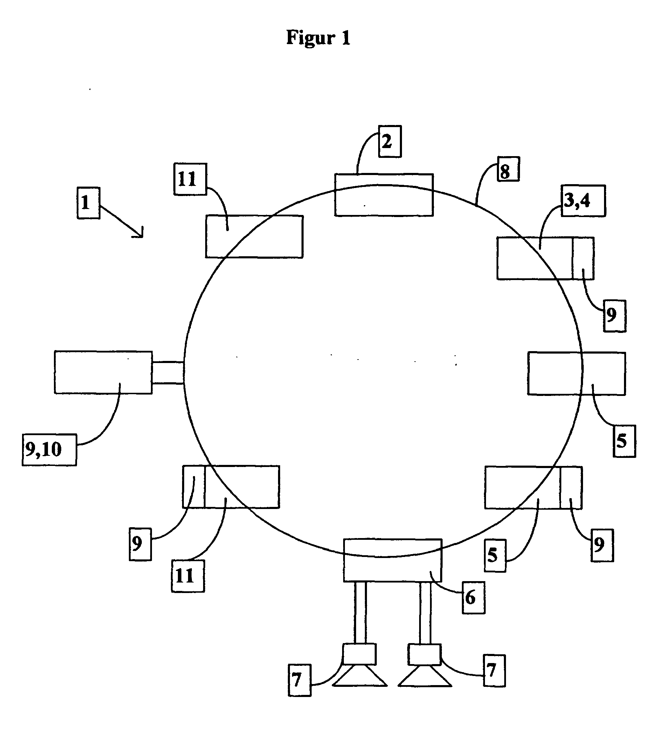

Die Erfindung wird nachfolgend anhand eines Ausführungsbeispiels gemäß Figur 1 erläutert; in dieser zeigt:
Figur 1 ein Soundsystem für ein Kraftfahrzeug, dessen Einheiten über ein Bussystem mit ringförmiger Topologie.

Das in Figur 1 beispielhaft dargestellt Soundsystem 1 für ein Kraftfahrzeug zeigt eine Steuereinheit 2, eine in einem Gerät zusammengefaßte Eingabeeinheit 3, eine Ausgabeeinheit 4, welche zusätzlich einen Speicher 9 aufweist, die zusammengefaßte Einheit wird auch Man-Machine-Interface MMI genannt, ein CD-Wechsler 5, ein FM-Tuner 5 mit zugeordnetem Speicher 9, eine Verstärkereinheit 6 mit daran angeschlossenen zwei Lautsprechern 7, eine Navigationseinheit 11 mit zugeordnetem Speicher 9, eine Rechnereinheit 10 mit integriertem Speicher 9 sowie einen TV-Tuner 11. Diese einzelnen Komponenten des Soundsystems 1 sind über ein Bussystem 8 ringförmig miteinander verbunden.

Über das Bussystem 8 werden sowohl Steuer-, Audio- als auch Multimediadaten übertragen. Durch die Steuereinheit 2 des Soundsystems 12 werden die einzelnen Komponenten 3, 4, 5, 6, 11, 10 entsprechend ihren Funktionalitäten angesteuert bzw. mit den notwendigen Daten für deren Funktionieren im System versorgt.

Beispielsweise wird das MMI 3,4,9 so angesteuert, daß die Anzeige 4 in einzelne Segmente unterteilt wird, welche einzelnen Tasten der Eingabeeinheit räumlich und funktionell zugeordnet sind, und daß in den Segmenten eine Darstellung der Bedienfunktion der diesem Segment zugeordneten Taste typisch in Form von Menuedarstellung gezeigt werden. Durch die Betätigung einer der Tasten wird die in dem zugeordneten Segment der Anzeigeeinheit 4 dargestellte Funktion ausgelöst. Diese Funktionen können vielfältigster Natur sein, wie zum Beispiel Lautstärke erhöhen, Lautstärke absenken, Loudness ein oder aus, Surround ein oder aus, System aus, Schlafmodus ein, Baß verstärken oder absenken, Balance nach links oder rechts verschieben, Umschalten auf TV-Tuner, Eingabemodus Navigation starten, Equalizing-Programmieren starten oder vieles mehr. Durch diese Darstellung kann der Benutzer das gesamte System 1 über die eine zentrale Eingabe- 3 und Anzeigeeinheit 4 bedienen. Die Darstellung und die Bedienung erforderlichen Daten sind in dem Speicher 9 des MMI abgelegt. Darüber hinaus sind aber nicht nur die derzeit aktuellen Daten, d.h. aktueller Bedienungs- und Darstellungsumfang, abgespeichert sondern auch alle möglichen Daten, welche für das MMI in seiner allgemeinsten Darstellung- und Bedienmöglichkeit relevant sind. Diese allgemeinen Daten zeigen somit die grundsätzlichen Möglichkeiten und damit der Funktionsumfang des MMI. Dieser ist nicht unbedingt identisch zu dem aktuell aktiven Funktionsumfang.

Entsprechendes gilt für die anderen Einheiten zur Generierung von Quelldaten wie den FM-Tuner mit dem zugeordneten, integrierten Speicher 9 und die Navigationseinheit 11 mit deren integrierten Speicher 9, der vorzugsweise als CD-ROM ausgebildet ist und daher einen umfassenden Funktionsumfang darstellen kann. Dieser Funktionsumfang umfaßt neben den Daten zum möglichen Funktionsumfang der Navigationseinheit 11 auch die Daten zum Funktionsumfang des TV-Tuners. Durch die Möglichkeit des Austausches der CD-ROM als Speicherbasis läßt sich der mögliche Funktionsumfang sehr einfach in Form einer Art Software-Update ändern.

Darüber hinaus zeigt das dargestellte Soundsystem eine Rechnereinheit 10 mit integriertem Speicher 9. Diese Recheneinheit 10 ist über eine nicht näher dargestellte lösbare Schnittstelle mit dem Bussystem 8 verbunden und kann über diese Daten mit den anderen Einheit des Systems 1 austauschen. Im Speicher 9 der Recheneinheit 10 sind beispielsweise die möglichen Funktionsumfänge des CD-Wechslers 5 und des Verstärkers 6 und ggf. der Lautsprecher 7 abgelegt. Der Recheneinheit 10 kann über eine vorhandene weiter standardisierte Schnittstelle wie RS 232 geänderte oder neue Funktionsumfänge für einzelne Einheiten des Systems eingespielt und bei Bedarf in deren Speicher 9 abgelegt werden. Da die Recheneinheit 10 lösbar mit dem Bussystem verbunden ist, ist mit Hilfe dieser stets auch eine einfache Überprüfung des Systems in der Art eines regelmäßigen Services mit integrierter Anpassung der möglichen Funktionsumfänge auf sehr einfache Weise möglich. In diesem Fall werden diese möglichen Funktionsumfänge entweder komplett oder in eingeschränktem Umfang einzelnen Speichern 9 des Systems 1 zugeordnet und dort abgespeichert.

Anhand der aus den einzelnen Funktionsumfänge der einzelnen Komponenten, auch Einheiten des Systems genannt, gebildete Funktionsumfang des gesamten Systems 1 werden der zu einer zentralen MMI zusammengefaßten Eingabe- 3 und Anzeigeeinheit 4 festgelegte Bedienmenues und Befehlsfolgen zu den Bedienelementen zugeordnet, anhand derer der Benutzer die Bedienung des Systems vornehmen kann. Weiterhin wird der Steuerbefehlssatz zwischen den einzelnen Komponenten entsprechend dem Funktionsumfang gewählt, wodurch ein reduzierter Verwaltungs- und Organisationsaufwand für den Betrieb des Systems notwendig ist. Dadurch wird auch die Betriebssicherheit erhöht, da weniger Wechselwirkungen zwischen einzelnen Systemzuständen und entsprechenden Funktionalitäten zu berücksichtigen sind.

Wird nun eine der Einheiten 3, 4, 5, 6, 7, 11 aus dem System 1 entfernt, durch eine andere Einheit ersetzt oder eine weitere Einheit hinzugefügt, so wird diese Veränderung des Systems durch die Steuereinheit 2 festgestellt. Danach wird automatisch ein Verfahrensablauf zur Festlegung des Funktionsumfanges des Soundsystems 1 ausgelöst.

In diesem werden der Reihe nach über das Bussystem 8 alle Funktionsumfänge der einzelnen Einheiten des Systems zentral erfaßt und aus den erfaßten Einzelfunktionsumfängen der Funktionsumfang des gesamten Systems 1 gebildet. Dies kann durch vollständige Übernahme der einzelnen Funktionsumfange einzelner Einheiten erfolgen oder durch teilweise Übernahme erfolgen. Welche Funktionalitäten einer Einheit in den Funktionsumfang des gesamten Systems übernommen wird, kann sich aus den Wechselwirkungen der einzelnen Einheiten ergeben oder kann durch individuelle Auswahl durch den Benutzer des Systems 1 ergeben.

Ein Beispiel für eine begrenzende Kombination von Einheiten wäre eine Balance- oder Faderfunktion, wenn das gesamte System nur einen einzigen Lautsprecher 7 aufweist. In diesem Fall würde die Steuereinheit 2 erkennen, daß die Fader- oder Balancefunktionalität der Verstärkereinheit 6 in der derzeitigen Systemkonfiguration mit einem einzigen Lautsprecher 7 nicht zulässig sind und daher nicht in den Funktionsumfang des gesamten Systems 1 übernommen werden können. Limitierende Faktoren können auch in den Eigenschaften einzelner Einheiten begründet sein.

Darüber hinaus kann der Benutzer des Systems durch Betätigung einer bestimmten Taste oder Tastenkombination der Eingabeeinheit 3 ohne Eingriff in die einzelnen Einheiten des Systems - Austausch, Entfernen oder Hinzufügen von Einheiten - eine Änderung des Funktionsumfanges auslösen. Dabei kann der Benutzer dann einen ihm genehmen Funktionsumfang festlegen. Dies erfolgt dann durch entsprechende Selektion der einzelnen Funktionalitäten der einzelnen Einheiten des System mit Hilfe der Bedieneinheit 3 und der Anzeigeneinheit 4. Dabei werden die möglichen Funktionalitäten in der Anzeigeneinheit 4 dargestellt und durch spezifische Betätigung der Tasten der Bedieneinheit 3 für die Übernahme in den Funktionsumfang des gesamten Systems 1 selektiert. Dies wird für alle Einheiten, deren Funktionsumfang frei selektierbar ist, durchgeführt. Auch ist es möglich, daß nur die Änderungen zu dem bestehenden Funktionsumfang des gesamten Systems eingeben werden, das heißt es werden nach Wunsch des Benutzers einzelne Funktionalitäten aus dem Funktionsumfang gelöscht oder neue Funktionalitäten dem bestehenden Funktionsumfang hinzugefügt. Auf der Basis des neu festgelegten Funktionsumfanges des Systems werden die diesem entsprechenden Bedienmenues in der Anzeigeeinheit 4 dargestellt und den Tasten der Bedieneinheit 3 die diesem entsprechenden Befehlsumfänge zugeordnet sowie die diesem Funktionsumfang entsprechenden Steuerbefehle zwischen den einzelnen Einheiten insbesondere zwischen der Steuereinheit 2 und der spezifischen Einheit ausgetauscht.

Durch diese Möglichkeit ist sichergestellt, daß jeder Benutzer nach seinen eigenen Bedürfnissen einen Funktionsumfang des gesamten Systems darstellen kann, ohne daß er jeweils auf andere neue Komponenten zurückgreifen muß. Damit kann ein und dasselbe Soundsystem durch die individuelle Möglichkeit, den Funktionsumfang festzulegen, völlig unterschiedliche Gesichter und Verhaltensweisen zeigen. Der eine Benutzer zeigt sich als völliger Purist in der Art der Bedienung, weshalb es ihm völlig genügt die Lautstärke zu regeln, sowie die Wahl der Signalquelle vornehmen zu können. Dieser wäre durch jede weiter Funktionalität gestört und wird sich durch diesen puristischen Funktionsumfang am ehesten angesprochen fühlen Der andere Benutzer möchte alle möglichen Eingriffsmöglichkeiten und Funktionalitäten jeder einzelnen Einheit des Systems zur Verfügung stehen haben und wird daher alle möglichen Funktionalitäten in den Funktionsumfang des gesamten Systems übernehmen. Mit einem solchen System wäre der zuvor genannte Benutzer völlig überfordert, während dieser Benutzer dadurch sehr angesprochen ist. Zumal dieses System ihm jederzeit die Möglichkeit gibt einzelne Komponenten durch andere Komponenten mit größerem Funktionsumfang auszutauschen oder weitere Komponenten hinzuzufügen und dadurch den Funktionsumfang ohne komplizierten Eingriff in das System einfach und sicher den jeweiligen Gegebenheiten anzupassen. Beispielsweise ist es möglich, die bisher einfache einfarbige, kleinflächige Anzeigeeinheit durch ein vielfarbiges Display zu ersetzen, was damit völlig andere komfortablere Bedienmenues ermöglicht und dadurch die Benutzung erleichtert. Diese Anpassung des Funktionsumfanges erfolgt stets aus der Kommunikation der einzelnen Einheiten untereinander über das Bussystem 8. Durch das gezeigte Soundsystem ist ein sehr flexibles, kostengünstig und sicher zu veränderndes System gegeben, das sich den individuellen Bedürfnissen in einfacher Weise anpassen läßt.

### Bezugszeichenliste:

- 1.: Soundsystem
- 2.: Steuereinheit
- 3.: Eingabeeinheit zu Bedienung des Systems (1)
- 4.: Anzeigeeinheit
- 5.: Einheit zur Generierung der Quelldaten in Form von Audiodaten
- 6.: Verstärkereinheit zur Verstärkung der Quelldaten,
- 7.: Lautsprechern
- 8.: Bussystem
- 9.: Speicher
- 10.: Rechnereinheit
- 11.: Einheit zur Generierung von Multimedia-Daten

## Patentansprüche

1. Soundsystem (1) für ein Kraftfahrzeug mit einer Steuereinheit (2), mit einer Eingabeeinheit (3) zu Bedienung des Systems (1), mit einer Anzeigeeinheit (4), mit einer Einheit (5) zur Generierung der Quelldaten in Form von Audiodaten, mit einer Verstärkereinheit (6) zur Verstärkung der Quelldaten, mit einem oder mehreren Lautsprechern (7) und mit einem Bussystem (8), das die Übertragung der Quelldaten und der Steuerdaten zur Steuerung der Einheiten (2, 3, 4, 5, 6, 7) zwischen den einzelnen Einheiten (2, 3, 4, 5, 6, 7) sicherstellt, **dadurch gekennzeichnet, daß** zumindest eine von der Steuereinheit (2) verschiedene Einheit (3, 4, 5, 6, 7) des Systems (1) einen ihr zugeordneten Speicher (9) aufweist, in dem der Funktionsumfang dieser Einheit (3, 4, 5, 6, 7) dargestellt ist, und dieser Funktionsumfang über den Bus (8) an die Steuereinheit (2) übertragbar ist und in dieser der übermittelte Funktionsumfang zumindest teilweise zur Bildung des Funktionsumfanges des gesamten Systems (1) herangezogen werden kann.

2. Soundsystem für ein Kraftfahrzeug nach Anspruch 1, **dadurch gekennzeichnet, daß** der einer Einheit (3, 4, 5, 6, 7) zugeordnete Speicher (9) Teil dieser Einheit (3, 4, 5, 6, 7) ist.

3. Soundsystem für ein Kraftfahrzeug nach Anspruch 1, **dadurch gekennzeichnet, daß** der der Einheit (3, 4, 5, 6, 7) zugeordnete Speicher (9) Teil einer über das Bussystem (8) mit der Einheit (3, 4, 5, 6, 7) verbunden, räumlich von den anderen Einheiten (2, 3, 4, 5, 6, 7) separierten Rechnereinheit (10) ist.

4. Soundsystem für ein Kraftfahrzeug nach Anspruch 3, **dadurch gekennzeichnet, daß** der der Einheit (3, 4, 5, 6, 7) zugeordnete Speicher (9) in der Rechnereinheit (10) mit geänderten Funktionsumfängen beschreibbar ausgebildet ist.

5. Soundsystem für ein Kraftfahrzeug nach einem der Ansprüche 3 bis 4, **dadurch gekennzeichnet, daß** die Rechnereinheit (10) über eine vorbereitete Schnittstelle in dem Bussystem (8) mit dem System (1) lösbar verbunden ist.

6. Soundsystem für ein Kraftfahrzeug nach einem der vorstehenden Ansprüche, **dadurch gekennzeichnet, daß** die Steuereinheit (2), die Eingabeeinheit (3) und die Anzeigeeinheit (4) dergestalt miteinander verbunden sind, daß mittels der Anzeigeeinheit (4) die für die Bedienung des gesamten Systems (1) erforderlichen Bedienmenues entsprechend dem Funktionsumfang des gesamten Systems (1) darstellbar sind und die Bedienung des Systems (1) mit Hilfe der Eingabeeinheit (3) anhand der Darstellungen in der Anzeigeeinheit (4) erfolgen kann.

7. Soundsystem für ein Kraftfahrzeug nach Anspruch 6, **dadurch gekennzeichnet, daß** die Eingabeeinheit (3) und die Anzeigeeinheit (4) zu einer einzigen Einheit (3,4) zusammengefaßt sind.

8. Soundsystem für ein Kraftfahrzeug nach Anspruch 7, **dadurch gekennzeichnet, daß** die Anzeigeeinheit (4) in einzelne Segmente unterteilt ist, welche einzelnen Tasten der Eingabeeinheit (3) räumlich zugeordnet sind und welche die jeweils der zugeordneten Taste zugewiesene Bedienfunktion darstellen, und daß die Zuweisung der Bedienfunktion der Tasten sowie die Darstellung der Bedienfunktion in den einzelnen Segmenten durch die Steuereinheit (2) anhand des Funktionsumfangs des gesamten Systems (1) gewählt ist.

9. Soundsystem für ein Kraftfahrzeug nach einem der vorstehenden Ansprüche, **dadurch gekennzeichnet, daß** neben den Audiodaten andere Multimedia-Daten, insbesondere Videodaten, übertragen werden können, und daß entsprechende Einheiten (11) zur Generierung dieser Multimedia-Daten, insbesondere DVD-Player, sowie entsprechende Einheiten zur Darstellung dieser Multimedia-Daten, insbesondere Displays vorgesehen sind.

10. Soundsystem für ein Kraftfahrzeug nach einem der vorstehenden Ansprüche insbesondere Anspruch 9, **dadurch gekennzeichnet, daß** in dem System (1) mehrere Einheiten (5, 11) zur Generierung von Audio- und/oder Multimedia-Daten vorgesehen sind.

11. Soundsystem für ein Kraftfahrzeug nach einem der vorstehenden Ansprüche, **dadurch gekennzeichnet, daß** das System (1) mehrere Verstärkereinheiten (6) zur Verstärkung der Audio-Quelldaten vorgesehen sind, welche jeweils einem oder mehreren Lautsprechern (7) räumlich zugeordnet und mit diesen so verbunden sind, daß ausschließlich diese mit den spezifisch verstärkten Audiodaten ansteuert werden.

12. Soundsystem für ein Kraftfahrzeug nach einem der vorstehenden Ansprüche, **dadurch gekennzeichnet, daß** das System (1) einen Zeitgeber aufweist, durch den nach Ablauf einer vorgegeben Zeitspanne die Bildung des Funktionsumfanges des gesamten Systems (1) aus den Funktionsumfängen der einzelnen Einheiten (2, 3, 4, 5, 6, 7,11) auslösbar ausgebildet ist.

13. Soundsystem für ein Kraftfahrzeug nach Anspruch 12, **dadurch gekennzeichnet, daß** die vorgegeben Zeitspanne für die Bildung des Funktionsumfanges des gesamten Systems (1) einstellbar ausgebildet.

14. Soundsystem für ein Kraftfahrzeug nach einem der vorstehenden Ansprüche 1 bis 11, **dadurch gekennzeichnet, daß** das System (1) so ausgebildet ist, daß bei Einschalten des gesamten Soundsystems (1) oder einer einzelnen Einheit (2, 3, 4, 5, 6, 7,11) davon die Bildung des Funktionsumfanges des gesamten Systems (1) aus den Funktionsumfängen der einzelnen Einheiten (2, 3, 4, 5, 6, 7,11) auslösbar ist.

15. Soundsystem für ein Kraftfahrzeug nach einem der vorstehenden Ansprüche, **dadurch gekennzeichnet, daß** mittels der Bedieneinheit (3) die Ausgabe des Status der Funktionsumfänge des gesamten Systems (1) und/oder einzelner und/oder aller Einheiten (2, 3, 4, 5, 6, 7,11) über die Anzeigeeinheit (4) auslösbar ist.

16. Soundsystem für ein Kraftfahrzeug nach einem der vorstehenden Ansprüche, **dadurch gekennzeichnet, daß** mittels der Bedieneinheit (3) die Bildung des Funktionsumfanges des gesamten Systems (1) aus den Funktionsumfängen der einzelnen Einheiten (2, 3, 4, 5, 6, 7,11) auslösbar ist.

17. Verwendung des Soundsystems (1) für ein Kraftfahrzeug nach einem der vorstehenden Ansprüche in einem Wohnwagen, in einem Haus oder in einer Wohnung.

18. Verfahren Festlegung des Funktionsumfangs eines Soundsystems (1) nach einem der vorstehenden Ansprüche 1 bis 16, **dadurch gekennzeichnet, daß** bei einer Änderung des Systems (1) insbesondere durch Hinzufügen einer weiteren Einheit (5, 11) zur Generierung von Quelldaten und bei der damit verbundenen Änderung des Funktionsumfanges des Systems (1) die Steuereinheit (2) von den einzelnen Einheiten (2, 3, 4, 5, 6, 7,11) ihren einheitenspezifischen Funktionsumfang aus den diesen Einheiten (2, 3, 4, 5, 6, 7,11) zugeordneten Speichern (9) zur Verfügung gestellt bekommt, und diese einheitenspezifischen Funktionsumfänge gesamt oder teilweise zu einem neuen gesamten Funktionsumfang des gesamten Systems (1) zusammengefügt, und daß im folgenden die Steuereinheit (2) entsprechend diesem gesamten Funktionsumfang die einzelnen Einheiten ansteuert und die generierten Quelldaten dementsprechend den einzelnen entsprechenden Einheiten (2, 3, 4, 5, 6, 7,11) im System zugewiesen werden.

19. Verfahren Festlegung des Funktionsumfangs eines Soundsystems nach Anspruch 18, **dadurch gekennzeichnet, daß** die Steuereinheit (2) entsprechend dem gesamten Funktionsumfang die Eingabe- (3) und die Anzeigeeinheit (4) derart mit Daten versorgt, daß der Benutzer des Soundsystems (1) die einzelnen Parameter der Funktionen des Systems (1) wie beispielsweise Lautstärke, Baß, Treble, Fader, Balance, Equalizer, usw. individuell einstellen kann.

20. Verfahren Festlegung des Funktionsumfangs eines Soundsystems nach Anspruch 18 und/oder 19, **dadurch gekennzeichnet, daß** die Steuereinheit (2) entsprechend diesem gesamten Funktionsumfang die Eingabe- (3) und die Anzeigeeinheit (4) derart mit Daten versorgt, daß der Benutzer des Soundsystems (1) die einzelnen Funktionen der einzelnen Einheiten (2, 3, 4, 5, 6, 7,11) zur Generierung von Quelldaten des Systems wie beispielsweise Play, Tracksprung, Repeat, Fast Forward, Rewind, Frequenzwechsel, Frequenzbandwechsel, Stummschaltung, Verkehrsnachrichten aktivieren/deaktivieren, Sendersuchlauf starten, RDS-Funktionen aktivieren/deaktivieren usw. über entsprechende Bedienmenues aufrufen kann.

## Claims

1. A sound system (1) for a motor vehicle with a control unit (2), an input unit (3) for operating the system (1), an indicating unit (4), a unit (5) for generating source data in the form of audio data, an amplifier unit (6) for amplifying the source data, one or more loudspeakers (7) and a bus system (8), which ensures the transmission of the source data and the control data for controlling the units (2, 3, 4, 5, 6, 7) between the individual units (2, 3, 4, 5, 6, 7), **characterised in that** at least one unit (2, 4, 5, 6, 7), different to the control unit (2), of the system (1) has a store (9) associated with it, in which the range of functionality of this unit (3, 4, 5, 6, 7) is represented and this range of functionality is transmissible via the bus (8) to the control unit (2) and the transmitted range of functionality can be utilised in it at least partially to form the range of functionality of the entire system (1).

2. A sound system for a motor vehicle as claimed in claim 1, **characterised in that** the store (9) associated with a unit (3, 4, 5, 6, 7) is part of this unit (3, 4, 5, 6, 7).

3. A sound system for a motor vehicle as claimed in claim 1, **characterised in that** the store (9) associated with the unit (3, 4, 5, 6, 7) is part of a processing unit (10), which is connected by means of the bus system (8) to the unit (3, 4, 5, 6, 7) and is spatially separated from the other units (2, 3, 4, 5, 6, 7).

4. A sound system for a motor vehicle as claimed in claim 1, **characterised in that** the store (9) associated with the unit (3, 4, 5, 6, 7) is describably formed in the processing unit (10) with altered ranges of functionality.

5. A sound system for a motor vehicle as claimed in one of claims 3 to 4, **characterised in that** the processing unit (10) is releasably connected to the system (1) by means of a prepared interface in the bus system (8).

6. A sound system for a motor vehicle as claimed in one of the preceding claims, **characterised in that** the control unit (2), the input unit (3) and the indicating unit (4) are connected together such that the operating menus necessary for the operation of the entire system may be represented by means of the indicating unit (4) corresponding to the range of functionality of the entire system (1) and the operation of the system (1) can be effected with the aid of the input unit (3) with reference to the representations in the indicating unit (4).

7. A sound system for a motor vehicle as claimed in claim 6, **characterised in that** the input unit (3) and the indicating unit (4) are combined to form a single unit (3, 4).

8. A sound system for a motor vehicle as claimed in claim 7, **characterised in that** the indicating unit (4) is divided into individual segments, which are spatially associated with individual keys of the input unit (3) and which represent the respective operating function allocated to the associated key and that the allocation of the operating function of the keys and the representation of the operating function in the individual segments is selected by the control unit (2) with reference to the range of functionality of the entire system (1).

9. A sound system for a motor vehicle as claimed in one of the preceding claims, **characterised in that** in addition to the audio data, other multimedia data, particularly video data, can be transmitted and that corresponding units (11) are provided for generating this multimedia data, particularly DVD players, and corresponding units for representing this multimedia data, particularly displays.

10. A sound system for a motor vehicle as claimed in one of the preceding claims, particularly claim 9, **characterised in that** a plurality of units (5, 11) are provided in the system for generating audio and/or multimedia data.

11. A sound system for a motor vehicle as claimed in one of the preceding claims, **characterised in that** a plurality of amplifier units (6) are provided in the system (1) for amplifying the audio source data, which are spatially associated with a respective one or more loudspeakers (7) and are so connected to them that only those with the specifically amplified audio data are triggered.

12. A sound system for a motor vehicle as claimed in one of the preceding claims, **characterised in that** the system (1) includes a timer, by which, after expiry of a predetermined period of time, the formation of the range of functionality of the entire system (1) from the ranges of functionality of the individual units (2, 3, 4, 5, 6, 7, 11) may be initiated.

13. A sound system for a motor vehicle as claimed in claim 12, **characterised in that** the predetermined period of time for the formation of the range of functionality of the entire system (1) is adjustable.

14. A sound system for a motor vehicle as claimed in one of the preceding claims 1 to 11, **characterised in that** the system (1) is so constructed that when the entire sound system (1) or an individual unit (2, 3, 4, 5, 6, 7, 11) thereof is switched on, the formation of the range of functionality of the entire system (1) from the ranges of functionality of the individual units (2, 3, 4, 5, 6, 7, 11) may be initiated.

15. A sound system for a motor vehicle as claimed in one of the preceding claims, **characterised in that** the output of the status of the range of functionality of the entire system (1) and/or individual and/or all units by the indicating unit (4) may be initiated by means of the operating unit (3).

16. A sound system for a motor vehicle as claimed in one of the preceding claims, **characterised in that** the formation of the range of functionality of the entire system (1) from the ranges of functionality of the individual units (2, 3, 4, 5, 6, 7, 11) may be initiated by means of the operating unit (3).

17. The use of the sound system (1) for a motor vehicle as claimed in one of the preceding claims in a caravan, a house or an apartment.

18. A method of defining the range of functionality of a sound system (1) as claimed in one of the preceding claims 1 to 16, **characterised in that** in the event of a change in the system (1), particularly by adding a further unit (5, 11) for generating source data and in the event of the change in the range of functionality of the system (1) associated therewith, the unit-specific range of functionality is made available to the control unit (2) by the individual units (2, 3, 4, 5, 6, 7, 11) from the stores (9) associated with these units (2, 3, 4, 5, 6, 7, 11) and these unit-specific ranges of functionality are combined in their entirety or in part to form a new entire range of functionality of the entire system (1) and that the control unit (2) subsequently triggers the individual units in accordance with this entire range of functionality and the generated source data is accordingly allocated to the individual corresponding units (2, 3, 4, 5, 6, 7, 11) in the system.

19. A method of defining the range of functionality of a sound system as claimed in claim 18, **characterised in that** the control unit (2) supplies the input unit (3) and indicating unit (4) with data in accordance with the entire range of functionality such that the user of the sound system (1) can individually adjust the individual parameters of the functions of the system (1), such as volume, base, treble, fader, balance, equaliser etc.

20. A method of defining the range of functionality of a sound system as claimed in claim 18 and/or 19, **characterised in that** the control unit (2) supplies the input unit (3) and the indicating unit (4) with data in accordance with this entire range of functionality such that the user of the sound system (1) can call up, by means of corresponding operating menus, the individual functions of the individual units (2, 3, 4, 5, 6, 7 ,11) for generating source data of the system, such as Play, Track Jump, Repeat, Fast Forward, Rewind, Frequency Change, Frequency Band Change, Muting, activate/deactivate Traffic News, Start Station Search, Activate/Deactivate Radio Data System functions etc.

## Revendications

1. Système de sonorisation (1) pour un véhicule comprenant une unité de commande (2), une unité de saisie (3) pour faire fonctionner le système (1), une unité d'affichage (4), une unité (5) pour générer des données sources sous la forme de données audio, une unité d'amplification (6) pour amplifier les données sources, un ou plusieurs haut-parleurs (7) et un système de bus (8) qui garantit la transmission des données sources et des données de commande pour la commande des unités (2, 3, 4, 5, 6, 7) entre les différentes unités (2, 3, 4, 5, 6, 7), **caractérisé en ce qu'**au moins une unité (3, 4, 5, 6, 7) du système (1) autre que l'unité de commande (2) présente une mémoire (9) qui lui est associée, dans laquelle figure l'étendue des fonctions de cette unité (3, 4, 5, 6, 7), laquelle peut être transmise à l'unité de commande (2) par le biais du bus (8), dans laquelle l'étendue des fonctions transmise peut être au moins prise en compte partiellement pour la constitution de l'étendue des fonctions de tout le système (1).

2. Système de sonorisation pour un véhicule selon la revendication 1, **caractérisé en ce que** la mémoire (9) associée à une unité (3, 4, 5, 6, 7) fait partie de cette unité (3, 4, 5, 6, 7).

3. Système de sonorisation pour un véhicule selon la revendication 1, **caractérisé en ce que** la mémoire (9) associée à une unité (3, 4, 5, 6, 7) fait partie d'une unité de calcul (10) séparée spatialement des autres unités (2, 3, 4, 5, 6, 7) et raccordée par le biais du système de bus (8) à l'unité (3, 4, 5, 6, 7).

4. Système de sonorisation pour un véhicule selon la revendication 3, **caractérisé en ce que** la mémoire (9) associée à l'unité (3, 4, 5, 6, 7) dans l'unité de calcul (10) est conçue de manière à pouvoir s'inscrire avec des étendues de fonctions modifiées.

5. Système de sonorisation pour un véhicule selon l'une des revendications 3 à 4, **caractérisé en ce que** l'unité de calcul (10) est raccordée de manière amovible au système (1) par le biais d'une interface préparée dans le système de bus (8).

6. Système de sonorisation pour un véhicule selon l'une des revendications précédentes, **caractérisé en ce que** l'unité de commande (2), l'unité de saisie (3) et l'unité d'affichage (4) sont raccordées ensemble de telle sorte que les menus de commande nécessaires pour faire fonctionner tout le système (1) puissent être représentés au moyen de l'unité d'affichage (4) conformément à l'étendue des fonctions de tout le système (1) et l'utilisation du système (1) peut se faire à l'aide de l'unité de saisie (3) grâce aux représentations dans l'unité d'affichage (4).

7. Système de sonorisation pour un véhicule selon la revendication 6, **caractérisé en ce que** l'unité de saisie (3) et l'unité d'affichage (4) sont rassemblées en une unique unité (3, 4).

8. Système de sonorisation pour un véhicule selon la revendication 7, **caractérisé en ce que** l'unité d'affichage (4) se subdivise en différents segments, qui sont associés spatialement à différentes touches de l'unité de saisie (3) et qui représentent la fonction de commande attribuée respectivement à la touche associée, et **en ce que** l'attribution de la fonction de commande des touches ainsi que la représentation de la fonction de commande dans les différents segments est choisie par l'unité de commande (2) à l'aide de l'étendue des fonctions de tout le système (1).

9. Système de sonorisation pour un véhicule selon l'une des revendications précédentes, **caractérisé en ce que**, en plus des données audio, d'autres données multimédia, notamment des données vidéo, peuvent être transmises et **en ce que** des unités correspondantes (11) pour la génération de ces données multimédia, notamment un lecteur DVD, ainsi que des unités correspondantes pour la représentation de ces données multimédia, notamment des écrans, sont prévues.

10. Système de sonorisation pour un véhicule selon l'une des revendications précédentes, notamment la revendication 9, **caractérisé en ce que** plusieurs unités (5, 11) sont prévues dans le système (1) pour la génération de données audio et/ou multimédia.

11. Système de sonorisation pour un véhicule selon l'une des revendications précédentes, **caractérisé en ce que** le système (1) comprend plusieurs unités d'amplification (6) pour amplifier les données sources audio, qui sont associées spatialement respectivement à un ou plusieurs haut-parleurs (7) et qui sont raccordées à ceux-ci de manière à être commandés exclusivement avec les données audio amplifiées spécifiquement.

12. Système de sonorisation pour un véhicule selon l'une des revendications précédentes, **caractérisé en ce que** le système (1) comprend une horloge, grâce à laquelle, après expiration d'un délai prédéfini, la constitution de l'étendue des fonctions de tout le système (1) est conçue de manière à pouvoir être déclenchée à partir des étendues des fonctions des différentes unités (2, 3, 4, 5, 6, 7, 11).

13. Système de sonorisation pour un véhicule selon la revendication 12, **caractérisé en ce que** le délai prédéfini pour la constitution de l'étendue des fonctions de tout le système (1) est conçu de manière à être réglable.

14. Système de sonorisation pour un véhicule selon l'une des revendications précédentes 1 à 11, **caractérisé en ce que** le système (1) est conçu de manière à ce que, en cas de mise en marche de tout le système de sonorisation (1) ou d'une unité individuelle (2, 3, 4, 5, 6, 7, 11) de celui-ci, la constitution de l'étendue des fonctions de tout le système (1) peut être déclenchée à partir des étendues des fonctions des différentes unités (2, 3, 4, 5, 6, 7, 11).

15. Système de sonorisation pour un véhicule selon l'une des revendications précédentes, **caractérisé en ce que**, au moyen de l'unité de service (3), l'édition du statut des étendues des fonctions de tout le système (1) et/ou des unités individuelles et/ou de toutes les unités (2, 3, 4, 5, 6, 7, 11) peut être déclenchée par le biais de l'unité d'affichage (4).

16. Système de sonorisation pour un véhicule selon l'une des revendications précédentes, **caractérisé en ce que**, au moyen de l'unité de service (3), la constitution de l'étendue des fonctions de tout le système (1) peut être déclenchée à partir des étendues des fonctions des différentes unités (2, 3, 4, 5, 6, 7, 11).

17. Utilisation du système de sonorisation (1) pour un véhicule selon l'une des revendications précédentes dans un camping-car, dans une maison ou dans un appartement.

18. Procédé de détermination de l'étendue des fonctions d'un système de sonorisation (1) selon l'une des revendications précédentes 1 à 16, **caractérisé en ce que**, pour une modification du système (1), en particulier par l'ajout d'une autre unité (5, 11) pour la génération de données sources et pour la modification qui y est liée de l'étendue des fonctions du système (1), l'unité de commande (2) obtient de la part des unités individuelles (2, 3, 4, 5, 6, 7, 11) l'étendue des fonctions spécifiques aux unités provenant des mémoires (9) associées à ces unités (2, 3, 4, 5, 6, 7, 11) et ces étendues des fonctions spécifiques aux unités sont ajoutées en entier ou bien partiellement à une nouvelle étendue des fonctions globale de tout le système (1) et **en ce que**, par la suite, l'unité de commande (2) commande les différentes unités conformément à cette étendue des fonctions globale et les données sources générées sont attribuées en conséquence aux différentes unités correspondantes (2, 3, 4, 5, 6, 7, 11) dans le système.

19. Procédé de détermination de l'étendue des fonctions d'un système de sonorisation selon la revendication 18, **caractérisé en ce que** l'unité de commande (2) alimente en données l'unité de saisie (3) et l'unité d'affichage (4) conformément à l'étendue globale des fonctions de sorte que l'utilisateur du système de sonorisation (1) puisse régler individuellement les différents paramètres des fonctions du système (1) comme par exemple le volume, la basse, les aigus, les graves, la balance, l'égaliseur, etc.

20. Procédé de détermination de l'étendue des fonctions d'un système de sonorisation selon la revendication 18 et/ou 19, **caractérisé en ce que** l'unité de commande (2) alimente en données l'unité de saisie (3) et l'unité d'affichage (4) conformément à cette étendue globale des fonctions de sorte que l'utilisateur du système de sonorisation (1) puisse appeler les différentes fonctions des différentes unités (2, 3, 4, 5, 6, 7, 11) pour la génération des données sources du système comme par exemple la lecture, le saut de plage, la répétition, l'avance rapide, le retour en arrière, le changement de fréquence, le changement de bande de fréquence, le silencieux, l'activation/la désactivation des informations sur le trafic, le démarrage des recherches d'émetteurs, l'activation/la désactivation des fonctions RDS etc. par le biais des menus de commande correspondants.
